# EUROPEAN PATENT APPLICATION

(11) **EP 3 434 978 A1**
(43) Date of publication of application: **30.01.2019**
(21) Application number: 18180132.5
(22) Date of filing: 27.06.2018
(51) Int. Cl.: F23R 3/28, F23R 3/10, F23R 3/50

(54) **A COMBUSTION CHAMBER AND A COMBUSTION CHAMBER FUEL INJECTOR SEAL**

(30) Priority: 24.07.2017 GB 201711865
(71) Applicant: Rolls-Royce plc, London SW1E 6AT (GB)
(72) Inventor: Rimmer, John E, Derby, Derbyshire DE24 8BJ (GB); Wilson, David P, Derby, Derbyshire DE24 8BJ (GB); Martin, Damian D, Derby, Derbyshire DE24 8BJ (GB)
(74) Representative: Rolls-Royce plc

(57) **Abstract**

A combustion chamber (15) comprises an upstream end wall (44), at least one fuel injector (56) and at least one seal (58). Each fuel injector (56) is arranged in a corresponding aperture (54) in the wall (44). Each seal (58) is arranged in a one of the apertures (54) in the wall (44) and around one of the fuel injectors (56). Each seal (58) has a first portion (60), a second portion (62) and a third portion (64). The second portion (62) abuts the corresponding fuel injector (56). Each seal (58) has a plurality of circumferentially spaced coolant passages (68) extending longitudinally there-through from the upstream end to the downstream end of the seal (58) to provide internal convective cooling of the seal (58) to improve the working life of the seal (58).

## Description

The present disclosure relates to a combustion chamber and in particular to a gas turbine engine combustion chamber and also relates to a combustion chamber fuel injector seal and in particular to a gas turbine engine combustion chamber fuel injector seal.

A combustion chamber comprises an upstream end wall, at least one annular wall, at least one fuel injector, at least one heat shield and at least one seal. The annular wall is secured to the upstream end wall and the upstream end wall has at least one aperture. Each heat shield is secured to the upstream end wall to protect the upstream end wall and each heat shield has an aperture aligned with a corresponding one of the aperture in the upstream end wall. Each fuel injector is arranged in a corresponding one of the apertures in the upstream end wall. Each seal is arranged in a corresponding one of the apertures in the upstream end wall and in an aperture in a corresponding one of the heat shields and around the corresponding one of the fuel injectors. Each seal has a first portion, a second portion and a third portion. The second portion of each seal abuts the corresponding one of the fuel injectors. The third portion of each seal is arranged at the downstream end of the seal and the third portion increases in diameter in a downstream direction. The first portion of each seal is arranged upstream of the second portion and the first portion has a plurality of coolant apertures extending there-through.

The coolant apertures in the first portion of each seal direct the coolant there-through with axial and radial velocity components towards the third portion of the seal. The coolant directed onto the third portions of the seals cools the seals.

However, the coolant supplied by the coolant apertures in each seal does not provide sufficient cooling to enable the seals to withstand the high temperature in the combustion chamber adjacent to the seals. The temperature experienced by the third portions of the seals is sufficient to produce oxidation and/or melting of the third portions of the seals. The oxidation and/or melting of the third portions of the seals may result in exposure of the fuel injectors to the high temperature in the combustion chamber which may result in cracking and/or oxidation of the fuel injectors. Furthermore, the oxidation and/or melting of the seals results in a change in the position of the flame within the combustion chamber which may result in oxidation and/or melting of the heat shields.

The present disclosure seeks to produce a combustion chamber and a combustion chamber fuel injector seal which reduces, or overcomes, the above mentioned problem.

According to a first aspect of the present disclosure there is provided a combustion chamber comprising an upstream end wall, at least one annular wall, at least one fuel injector and at least one seal, the at least one annular wall being secured to the upstream end wall, the upstream end wall having at least one aperture, each fuel injector being arranged in a corresponding one of the apertures in the upstream end wall, each seal being annular, each seal being arranged in a corresponding one of the apertures in the upstream end wall and around the corresponding one of the fuel injectors, each seal having an upstream end, a downstream end, an inner surface facing the corresponding one of the fuel injectors and an outer surface facing away from the corresponding one of the fuel injectors, each seal abutting the corresponding one of the fuel injectors, each seal comprising at least a first portion and a second portion, the first portion of each seal being arranged at the upstream end of the seal, the first portion of each seal extending radially outwardly from the second portion, the first portion of each seal being secured to the upstream end wall such that the seal is movable radially with respect to the axis of the corresponding aperture in the upstream end wall, each seal having a plurality of circumferentially spaced coolant passages extending longitudinally internally through the second portion of the seal from the upstream end towards the downstream end of the seal.

The coolant passages in each seal may extend to the downstream end of the seal. The coolant passages in each seal may extend part way towards the downstream end of the seal and then extend radially outwardly to the outer surface of the seal upstream of the downstream end of the seal. Some of the spaced coolant passages in each seal may extend all the way to the downstream end of the seal and some of the coolant passages in each seal may extend part way towards the downstream end of the seal and then extend radially outwardly to the outer surface of the seal upstream of the downstream end of the seal.

The downstream end of each seal may have an annular slot, the annular slot at the downstream end of each seal being arranged at the downstream ends of the plurality of circumferentially spaced coolant apertures of the corresponding seal.

Each coolant passage in each seal may diverge circumferentially at a junction with the annular slot.

Each coolant passage in each seal may have turbulators or pedestals.

The second portion of each seal may be cylindrical from the first portion at the upstream end of the seal to the downstream end of the seal.

The outlet of each coolant passage may be angularly spaced from the inlet of the coolant passage.

Each seal may have a third portion, the second portion abutting the corresponding one of the fuel injectors, the third portion being arranged at the downstream end of the seal, the third portion increasing in diameter in a downstream direction, the second portion being arranged upstream of the third portion, the coolant apertures extending internally through the second portion with an axial component and the coolant apertures extending internally through the third portion with axial and radial components.

The third portion of each seal may be a frustoconical portion or a bell mouth portion.

Each seal may have an annular slot at the downstream end of the frustoconical portion of the seal.

Each seal may have a plurality of circumferentially spaced second coolant passages extending longitudinally internally through the second portion of the seal from the upstream end to the outer surface of the seal.

Each second coolant passage in each seal may have turbulators or pedestals.

The outer surface of each seal may have a second annular slot, the second annular slot at the outer surface of each seal being arranged at the downstream ends of the plurality of circumferentially spaced second coolant apertures of the corresponding seal.

Each second coolant passage in each seal may diverge circumferentially at a junction with the second annular slot.

The coolant passages and the second coolant passages of each seal may be arranged circumferentially alternately around the seal.

Each seal may be circular in cross-section.

The inner surface of each seal may have a substantially constant diameter throughout its axial length. The inner surface of the second portion of each seal may have a substantially constant diameter along its axial length and the inner surface of the third portion of each seal has an increasing diameter along its axial length.

The axes of the second coolant apertures in second portion of each seal may be arranged to intersect the outer surface of the third portion of the seal to direct coolant onto the third portion of the seal.

The combustion chamber may be an annular combustion chamber comprising an annular upstream end wall, a radially inner annular wall, a radially outer annular wall, a plurality of fuel injectors and a plurality of seals and the annular upstream end wall having a plurality of apertures.

The fuel injector may be a rich burn fuel injector or a lean burn fuel injector.

The combustion chamber may be a gas turbine engine combustion chamber.

The gas turbine engine may be an industrial gas turbine engine, an automotive gas turbine engine, a marine gas turbine engine or an aero gas turbine engine.

The aero gas turbine engine may be a turbofan gas turbine engine, a turbojet gas turbine engine, a turbo-propeller gas turbine engine or a turbo-shaft gas turbine engine.

According to a second aspect of the present disclosure there is provided a combustion chamber fuel injector seal, the seal being annular, the seal having an upstream end, a downstream end, an inner surface and an outer surface, the seal being arranged in operation to abut a fuel injector, the seal comprising at least a first portion and a second portion, the first portion of the seal being arranged at the upstream end of the seal, the first portion of the seal extending radially outwardly from the second portion, the seal having a plurality of circumferentially spaced coolant passages extending longitudinally internally through the second portion of the seal from the upstream end towards the downstream end of the seal.

The coolant passages in the seal may extend to the downstream end of the seal. The coolant passages in the seal may extend part way towards the downstream end of the seal and then extend radially outwardly to the outer surface of the seal upstream of the downstream end of the seal. Some of the spaced coolant passages in the seal may extend all the way to the downstream end of the seal and some of the coolant passages in the seal may extend part way towards the downstream end of the seal and then extend radially outwardly to the outer surface of the seal upstream of the downstream end of the seal.

The downstream end of the seal may have an annular slot, the annular slot at the downstream end of the seal being arranged at the downstream end of the plurality of circumferentially spaced coolant apertures of the seal.

Each coolant passage in the seal may diverge circumferentially at a junction with the annular slot.

Each coolant passage in the seal may have turbulators or pedestals.

The second portion of the seal may be cylindrical from the first portion at the upstream end of the seal to the downstream end of the seal.

The outlet of each coolant passage may be angularly spaced from the inlet of the coolant passage.

The seal may have a cylindrical portion and a divergent portion, the divergent portion increasing in diameter in a downstream direction, the cylindrical portion being arranged between the radially extending flange and the divergent portion.

The seal may have a third portion, the second portion being arranged in operation to abut a fuel injector, the third portion being arranged at the downstream end of the seal, the third portion increasing in diameter in a downstream direction, the second portion being arranged upstream of the third portion, the coolant apertures extending internally through the second portion with an axial component and the coolant apertures extending internally through the third portion with axial and radial components.

The divergent portion of the seal may be a frustoconical portion or a bell mouth portion.

The seal may have an annular slot at the downstream end of the frustoconical portion of the seal.

The seal may have a plurality of circumferentially spaced second coolant passages extending longitudinally internally through the second portion from the upstream end to the outer surface of the seal.

Each second coolant passage in the seal may have turbulators or pedestals.

The outer surface of the seal may have a second annular slot, the second annular slot at the outer surface of the seal being arranged at the downstream ends of the plurality of circumferentially spaced second coolant apertures of the seal.

Each second coolant passage in the seal may diverge circumferentially at a junction with the second annular slot.

The coolant passages and the second coolant passages of the seal may be arranged circumferentially alternately around the seal.

The seal may be circular in cross-section.

The inner surface of the seal may have a substantially constant diameter throughout its axial length. The inner surface of the second portion of the seal may have a substantially constant diameter along its axial length and the inner surface of the third portion of the seal has an increasing diameter along its axial length.

The axes of the second coolant apertures in second portion of the seal may be arranged to intersect the outer surface of the third portion of the seal to direct coolant onto the third portion of the seal.

The skilled person will appreciate that except where mutually exclusive, a feature described in relation to any one of the above aspects of the invention may be applied mutatis mutandis to any other aspect of the invention.

Embodiments of the invention will now be described by way of example only, with reference to the Figures, in which:
Figure 1 is a sectional side view of a gas turbine engine having a combustion chamber according to the present disclosure.
Figure 2 is an enlarged cross-sectional view through a combustion chamber according to the present disclosure.
Figure 3 is an enlarged cross-sectional view of a combustion chamber fuel injector seal according to the present disclosure.
Figure 4 is a view in the direction of Arrow A in Figure 3.
Figure 5 is an enlarged cross-sectional view of another combustion chamber fuel injector seal according to the present disclosure.
Figure 6 is a view in the direction of Arrow B in Figure 5.
Figure 7 is an enlarged cross-sectional view of a further combustion chamber fuel injector seal according to the present disclosure.
Figure 8 is a view in the direction of Arrow C in Figure 7.
Figure 9 is an enlarged cross-sectional view of an additional combustion chamber fuel injector seal according to the present disclosure.
Figure 10 is a view in the direction of Arrow D in Figure 9.
Figure 11 is an alternative view in the direction of Arrow D in Figure 9.
Figure 12 is a further enlarged view of a passage in the combustion chamber fuel injector seal shown in Figure 3, Figure 5, Figure 7 or Figure 9.
Figure 13 is an alternative view in the direction of Arrow A in Figure 3.
Figure 14 is a cross-sectional view through a fuel injector shown in Figure 2.
Figure 15 is a cross-sectional view through an alternative fuel injector shown in Figure 2.

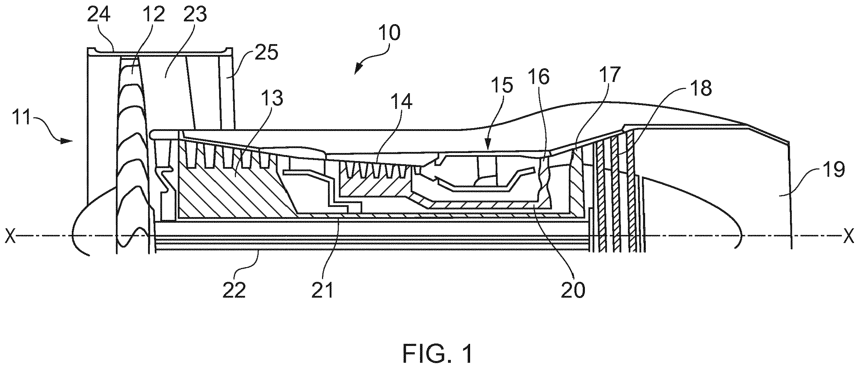

With reference to figure 1, a gas turbine engine is generally indicated at 10, having a principal and rotational axis X-X. The engine 10 comprises, in axial flow series, an air intake 11, a propulsive fan 12, an intermediate pressure compressor 13, a high-pressure compressor 14, combustion equipment 15, a high-pressure turbine 16, an intermediate pressure turbine 17, a low-pressure turbine 18 and an exhaust nozzle 19. A fan nacelle 24 generally surrounds the fan 12 and defines the intake 11 and a fan duct 23. The fan nacelle 24 is secured to the core engine by fan outlet guide vanes 25.

The gas turbine engine 10 works in the conventional manner so that air entering the intake 11 is compressed by the fan 12 to produce two air flows: a first air flow into the intermediate pressure compressor 13 and a second air flow which passes through the bypass duct 23 to provide propulsive thrust. The intermediate pressure compressor 13 compresses the air flow directed into it before delivering that air to the high pressure compressor 14 where further compression takes place.

The compressed air exhausted from the high-pressure compressor 14 is directed into the combustion equipment 15 where it is mixed with fuel and the mixture combusted. The resultant hot combustion products then expand through, and thereby drive the high, intermediate and low-pressure turbines 16, 17, 18 before being exhausted through the nozzle 19 to provide additional propulsive thrust. The high 16, intermediate 17 and low 18 pressure turbines drive respectively the high pressure compressor 14, the intermediate pressure compressor 13 and the fan 12, each by suitable interconnecting shaft 20, 21 and 22 respectively.

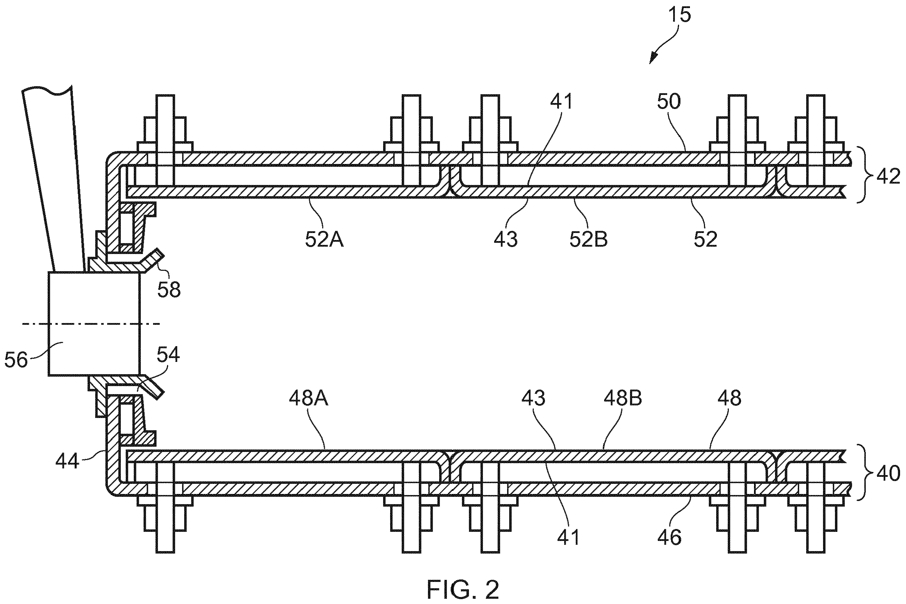

The combustion chamber 15, as shown more clearly in figure 2, is an annular combustion chamber and comprises a radially inner annular wall structure 40, a radially outer annular wall structure 42 and an upstream end wall structure 44. The radially inner annular wall structure 40 comprises a first annular wall 46 and a second annular wall 48. The radially outer annular wall structure 42 comprises a third annular wall 50 and a fourth annular wall 52. The second annular wall 48 is spaced radially from and is arranged radially around the first annular wall 46 and the first annular wall 46 supports the second annular wall 48. The fourth annular wall 52 is spaced radially from and is arranged radially within the third annular wall 50 and the third annular wall 50 supports the fourth annular wall 52. The upstream end of the first annular wall 46 is secured to the upstream end wall structure 44 and the upstream end of the third annular wall 50 is secured to the upstream end wall structure 44. The upstream end wall structure 44 has a plurality of circumferentially spaced apertures 54. The combustion chamber 15 also comprises a plurality of fuel injectors 56 and a plurality of seals 58. Each fuel injector 56 is arranged in a corresponding one of the apertures 54 in the upstream end wall structure 44 and each seal 58 is arranged in a corresponding one of the apertures 54 in the upstream end wall structure 44 and each seal 58 is arranged around, e.g. surrounds, the corresponding one of the fuel injectors 56. Each seal 58 is annular, e.g. a ring. The fuel injectors 56 are arranged to supply fuel into the annular combustion chamber 15 during operation of the gas turbine engine 10.

The second annular wall 48 comprises a plurality of rows of combustion chamber tiles 48A and 48B and the fourth annular wall 52 comprises a plurality of rows of combustion chamber tiles 52A and 52B. The combustion chamber tiles 48A and 48B are secured onto the first annular wall 46 by threaded studs, washers and nuts and the combustion chamber tiles 52A and 52B are secured onto the third annular wall 50 by threaded studs, washers and nuts.

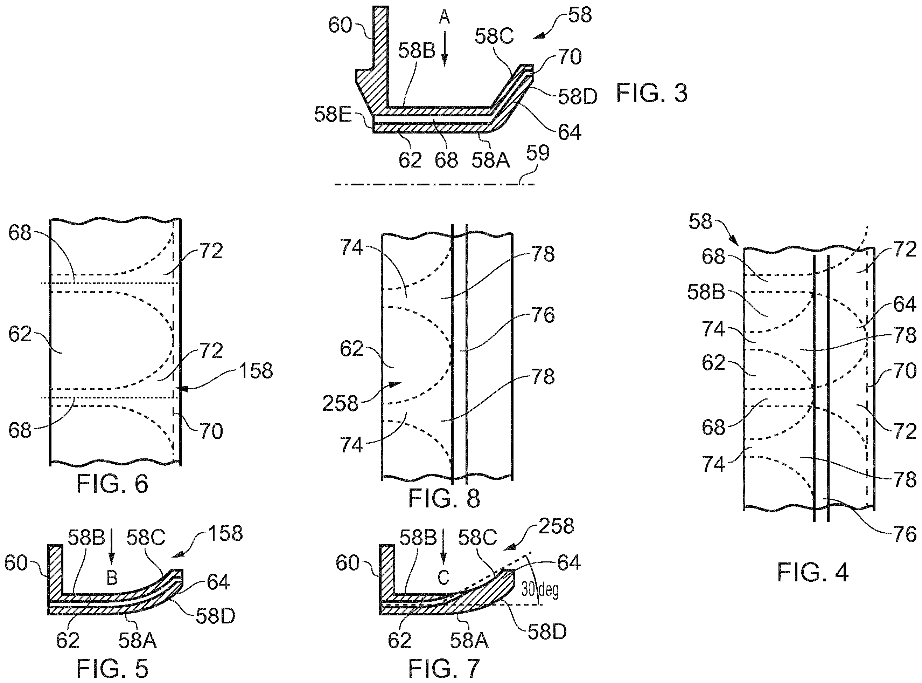

Figures 3 and 4 show a seal according to the present disclosure in more detail. Each seal 58 has a first portion 60, a second portion 62 and a third portion 64. Each seal 58 has an inner surface 58A facing the corresponding one of the fuel injectors 56 and an outer surface 58A facing away from the corresponding one of the fuel injectors 56. The second portion 62 of each seal 58 abuts and seals against the corresponding one of the fuel injectors 56. The first portion 60 of each seal 58 is arranged at the upstream end of the second portion 62 and the third portion 64 of the seal 58 is arranged downstream of the second portion 62 at the downstream end of the seal 58. The first portion 60 of each seal 58 comprises a flange which extends radially from the upstream end of the second portion 62 of the seal 58. The first portion 60 of each seal 58 is secured to the upstream end wall structure 44 such that the seal 58 may move radially with respect to the axis of the corresponding aperture 54 in the upstream end wall structure 44. The first portion 60 of each seal 58 may for example be trapped between the upstream surface of the upstream end wall structure 44 and a ring which is removably secured to the upstream end wall structure 44, for example by nuts and bolts or nuts and studs. The third portion 64 of each seal 58 increases in diameter in a downstream direction from the second portion 62 to a maximum diameter at the downstream end of the seal 58. The third portion 64 of each seal 58 has an upstream surface 58C and a downstream surface 58D. Each seal 58 thus has a cylindrical portion, the second portion, 62 and a divergent, or flared, portion, the third portion, 64 and the divergent portion increases in diameter in a downstream direction and the cylindrical portion is arranged between a radially extending flange, the first portion, 60 and the divergent portion, the third portion 64. Each seal 58 is circular in cross-section and has an axis 59. The third portion 64 may be frustoconical or may be a bell mouth. The inner surface 58A is a radially inner surface and the outer surface 58B is a radially outer surface. The inner surface 58A of the second portion 62 of each seal 58 has a substantially constant diameter along its axial length and the downstream surface 58D of the third portion 64 of each seal 58 has an increasing diameter along its axial length. The downstream surface 58D is a continuation of the inner surface 58A and the upstream surface 58C is a continuation of the outer surface 58B.

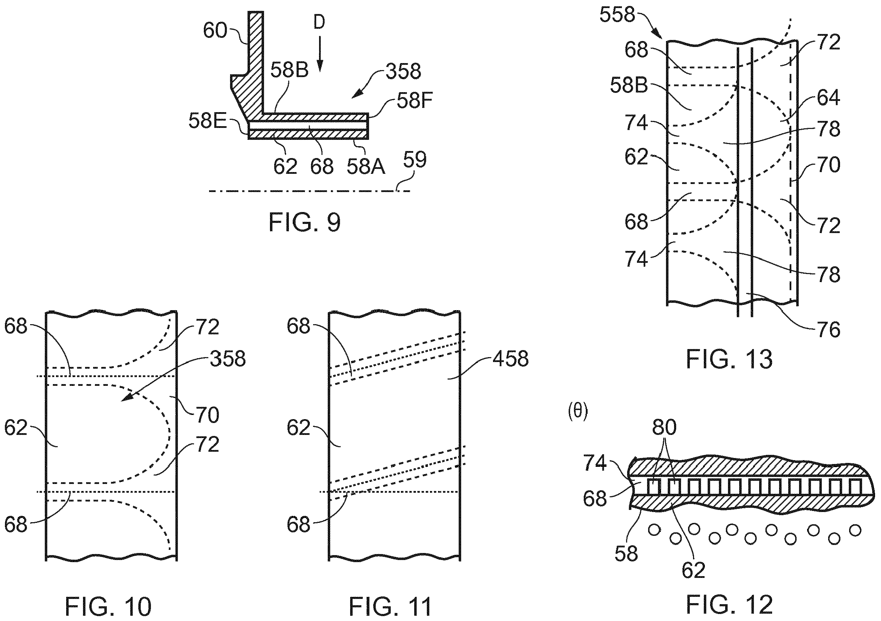

Each seal 58 has a plurality of circumferentially spaced coolant passages 68 extending longitudinally there-through, e.g. internally there-through, from the upstream end to the downstream end of the seal 58. In particular each seal 58 has a plurality of circumferentially spaced coolant passages 68 extending through the second and third portions 62 and 64. Each coolant passage 68 has a first portion in the second portion 62 of the seal 58 and a second portion in the third portion 64 of the seal 58. The coolant passages 68 extend through the second portion 62 with an axial component and the coolant passages 68 extend through the third portion 64 with axial and radial components. Thus, the first portion of each coolant passage 68 extends axially, longitudinally, through the second portion 62 of the seal 58 and the second portion of each coolant passage 68 extends axially and radially through the third portion 64 of the seal 58. Each coolant passage 68 has an inlet in an upstream surface 58E at the upstream end of the seal 58 and an outlet in the downstream surface 58D at the downstream end of the seal 58. The outlet of each coolant passage 68 is at the radially outer end of the third portion 64 of the seal 58. The outlet of each coolant passage 68 is arranged axially spaced in a downstream direction from its inlet and the outlet of each coolant passage 68 is arranged radially spaced from its inlet. The downstream end of each seal 58 has an annular slot 70. The annular slot 70 at the downstream end of each seal 58 is arranged at the downstream ends of the plurality of circumferentially spaced coolant passages 68 in the seal 58. Each seal 58 has an annular slot 70 at the downstream end of the frustoconical portion of the seal 58. The downstream end of each coolant passage 68 in each seal 58 has a divergent portion 72 which diverges circumferentially at its downstream end towards the junction with the annular slot 70. Each coolant passage 68 is spaced from and arranged between the inner surface 58A and the outer surface 58B in the second portion 62 of the seal 58. Each coolant passage 68 is spaced from and arranged between the upstream surface 58C and the downstream surface 58D in the third portion 64 of the seal 58, except at the outlet of the coolant passage 68. Each coolant passage 68 may be arranged mid-way between the inner surface 58A and the outer surface 58B. Each coolant passage 68 may be arranged mid-way between the upstream surface 58C and the downstream surface 58D. Each coolant passage 68 in each seal 58 may have turbulators or pedestals 80, as shown in Figure 12.

Each seal 58 has a plurality of circumferentially spaced second coolant passages 74 extending longitudinally there-through, e.g. internally there-through, from the upstream end to the outer surface 58B of the seal 58. In particular each seal 58 has a plurality of circumferentially spaced second coolant passages 68 extending through the second portion 62. The second coolant passages 74 extend through the second portion 62 initially with an axial component and then the second coolant passages 74 extend through the second portion 62 with axial and radial components. Thus, the first portion of each second coolant passage 74 extends axially, longitudinally, through the second portion 62 of the seal 58 and the second portion of each second coolant passage 74 extends axially and radially through the second portion 64 of the seal 58. Each second coolant passage 74 has an inlet in the upstream surface 58E at the upstream end of the seal 58 and an outlet in the outer surface 58B upstream of the third portion 64 of the seal 58. The outer surface 58B of each seal 58 has a second annular slot 76. The second annular slot 76 in the outer surface 58B of each seal 58 is arranged at the downstream ends of the plurality of circumferentially spaced second coolant passages 74 in the seal 58. The downstream end of each second coolant passage 74 in each seal 58 has a divergent portion 78 which diverges circumferentially at its downstream end towards the junction with the second annular slot 76. Each second coolant passage 74 in each seal 58 has a divergent portion 78 which diverges circumferentially at a junction with the second annular slot 76. Each second coolant passage 74 in each seal 58 may have turbulators or pedestals 80, as shown in Figure 12. The axes of the second coolant passages 74 in second portion 62 of each seal 58 are arranged to intersect the upstream surface 58C of the third portion 64 of the seal 58 to direct coolant onto the third portion 64 of the seal 58. The second portions of the second coolant passages 74 are angled to direct the coolant onto the upstream surface 58C of the third portion 64 of the seal 58. The second portions of the second coolant passages 74 may be arranged at an angle of 30° to the axis 59 of the seal 58. Each second coolant passage 74 is spaced from and arranged between the inner surface 58A and the outer surface 58B in the second portion 62 of the seal 58, except at the outlet of the second coolant passage 74. Each coolant passage 68 may be arranged mid-way between the inner surface 58A and the outer surface 58B. The coolant passages 68 and the second coolant passages 74 of each seal 58 are arranged circumferentially alternately around the seal 58 as shown in Figure 4.

The seals 58 may be manufactured by casting using cores to define the coolant passages and then removing, e.g. dissolving, the cores. The method may or may not involve machining to form the slots. Alternatively, the seals 58 may be manufactured by additive layer manufacturing, e.g. powder bed laser deposition.

In operation coolant flows through the coolant passages 68 of each seal to provide internal convective cooling throughout the whole length of the seal 58, e.g. the lengths of the second portion 62 and the third portion 64 of the seal 58. Similarly, coolant flows through the second coolant passages 74 of each seal 58 to provide internal convective cooling throughout the majority of the length of the second portion 62 of the seal 58. In addition the coolant flowing through the second coolant passages 74 of each seal 58 provides a film of coolant onto the outer surface 58B of the second portion 62 and the upstream surface 58C of the third portion 64 of the seal 58. The coolant flowing through the first coolant passages 68 may be arranged to prevent stabilisation of the flame on the radially outer extremity of the third portion 64 of the seal 58 to prevent oxidation of this portion of the seal 58.

Figures 5 and 6 show an alternative seal according to the present disclosure in more detail. The seal 158 is substantially the same as the seal 58 shown in figures 3 and 4 and like parts are denoted by like numerals. The seal 158 in figures 5 and 6 is similar in that it has a plurality of coolant passages 68 and an annular slot 70 but differs in that it does not have a plurality of second passages and a corresponding second annular slot.

The seals 158 may be manufactured by casting using cores to define the coolant apertures and then removing, e.g. dissolving, the cores. The method may or may not involve machining to form the slot. Alternatively, the seals may be manufactured by additive layer manufacturing, e.g. powder bed laser deposition. In operation coolant flows through the coolant passages 68 of each seal to provide internal convective cooling throughout the whole length of the seal 58, e.g. the lengths of the second portion 62 and the third portion 64 of the seal 58. The coolant flowing through the first coolant passages 68 may be arranged to prevent stabilisation of the flame on the radially outer extremity of the third portion 64 of the seal 58 to prevent oxidation of this portion of the seal 58.

Figures 7 and 8 show an alternative seal according to the present disclosure in more detail. The seal 258 is substantially the same as the seal 58 shown in figures 3 and 4 and like parts are denoted by like numerals. The seal 158 in figures 7 and 8 is similar in that it has a plurality of second coolant passages 74 and a second annular slot 76 but differs in that it does not have a plurality of coolant passages and a corresponding annular slot.

The seals 258 may be manufactured by casting using cores to define the coolant apertures and then removing, e.g. dissolving, the cores. The method may or may not involve machining to form the slot. Alternatively, the seals may be manufactured by additive layer manufacturing, e.g. powder bed laser deposition.

In operation coolant flows through the second coolant passages 74 of each seal 58 to provide internal convective cooling throughout the majority of the length of the second portion 62 of the seal 58. In addition the coolant flowing through the second coolant passages 74 of each seal 58 provides a film of coolant onto the outer surface 58B of the second portion 62 and the upstream surface 58C of the third portion 64 of the seal 58.

Figures 9 and 10 show an alternative seal according to the present disclosure in more detail. Each seal 358 has a first portion 60 and a second portion 62. Each seal 58 has an inner surface 58A facing the corresponding one of the fuel injectors 56 and an outer surface 58A facing away from the corresponding one of the fuel injectors 56. The second portion 62 of each seal 358 abuts and seals against the corresponding one of the fuel injectors 56. The first portion 60 of each seal 358 is arranged at the upstream end of the second portion 62. The first portion 60 of each seal 358 comprises a flange which extends radially from the upstream end of the second portion 62 of the seal 358. The first portion 60 of each seal 358 is secured to the upstream end wall structure 44 such that the seal 358 may move radially with respect to the axis of the corresponding aperture 54 in the upstream end wall structure 44. The first portion 60 of each seal 358 may for example be trapped between the upstream surface of the upstream end wall structure 44 and a ring which is removably secured to the upstream end wall structure 44, for example by nuts and bolts or nuts and studs. Each seal 358 thus has a cylindrical portion, the second portion, 62 and does not have a divergent, or flared, portion. Each seal 358 is circular in cross-section and has an axis 59. The inner surface 58A is a radially inner surface and the outer surface 58B is a radially outer surface. The inner surface 58A of the second portion 62 of each seal 358 has a substantially constant diameter along its axial length. Each seal 358 is cylindrical from the radially extending flange at the upstream end of the seal 358 to the downstream end of the seal 358.

Each seal 358 has a plurality of circumferentially spaced coolant passages 68 extending longitudinally there-through, e.g. internally there-through, from the upstream end to the downstream end of the seal 358. In particular each seal 358 has a plurality of circumferentially spaced coolant passages 68 extending through the second portion 62. The coolant passages 68 extend through the full length of the second portion 62 with an axial component. Thus, each coolant passage 68 extends axially, longitudinally, throughout the full length of the second portion 62 of the seal 358. Each coolant passage 68 has an inlet in an upstream surface 58E at the upstream end of the seal 358 and an outlet in the downstream surface 58F at the downstream end of the seal 358. The downstream end of each seal 358 has an annular slot 70. The annular slot 70 at the downstream end of each seal 358 is arranged at the downstream ends of the plurality of circumferentially spaced coolant passages 68 in the seal 358. The downstream end of each coolant passage 68 in each seal 58 has a divergent portion 72 which diverges circumferentially at its downstream end towards the junction with the annular slot 70. Each coolant passage 68 is spaced from and arranged between the inner surface 58A and the outer surface 58B in the second portion 62 of the seal 58. Each coolant passage 68 may be arranged mid-way between the inner surface 58A and the outer surface 58B. Each coolant passage 68 in each seal 58 may have turbulators or pedestals 80, as shown in Figure 12.

The seals 358 may be manufactured for example by casting and then drilling, e.g. ECM, EDM or laser drilling, the coolant apertures. These seals 358 may be manufactured by casting using cores to define the coolant apertures and then removing, e.g. dissolving, the cores. The two above methods may or may not involve machining to form the slot. Alternatively, these seals 358 may be manufactured by additive layer manufacturing, e.g. powder bed laser deposition.

In operation coolant flows through the coolant passages 68 of each seal 358 to provide internal convective cooling throughout the whole length of the seal 358, e.g. the lengths of the second portion 62 of the seal 358. The coolant flowing through the first coolant passages 68 may be arranged to prevent stabilisation of the flame on the radially outer extremity of the second portion 62 of the seal 58 to prevent oxidation of this portion of the seal 358.

Figure 11 shows an alternative seal according to the present disclosure in more detail. The seal 458 is substantially the same as the seal 358 shown in figures 9 and 10 and like parts are denoted by like numerals. The seal 458 in figure 11 differs in that the outlet of each coolant passage 68 is angularly spaced from the inlet of the coolant passage 68 and it does not have an annular slot.

In operation coolant flows through the coolant passages 68 of each seal 458 to provide internal convective cooling throughout the whole length of the seal 458, e.g. the lengths of the second portion 62 of the seal 458. The coolant flowing through the first coolant passages 68 may be arranged to prevent stabilisation of the flame on the radially outer extremity of the second portion 62 of the seal 458 to prevent oxidation of this portion of the seal 458. This arrangement has coolant passages with a longer length and greater surface area than that of figures 9 and 10 to increase the internal convective cooling.

The turbulators, pedestals, in the coolant passages of each of the seals described above increases the internal convective cooling.

In another alternative arrangement, not shown, each seal has a plurality of circumferentially spaced second coolant passages extending through, e.g. internally through, the second portion. The second coolant passages extend through the second portion initially with an axial component and then the second coolant passages extend through the second portion with axial and radial components. Thus, the first portion of each second coolant passage extends axially, longitudinally, through the second portion of the seal and the second portion of each second coolant passage extends axially and radially through the second portion of the seal. Each second coolant passage has an inlet in the upstream surface at the upstream end of the seal and an outlet in the outer surface upstream of the downstream end of the second portion of the seal.

The arrangements of figures 9 to 11 have reduced casting complexity and reduced cost due to the removal of the third portion, divergent portion of the seal. The arrangements of figures 9 to 11 have reduced the emissions of smoke. The angle of the coolant passages in figure 11 may be optimised to further reduce emissions of smoke.

The coolant passages and second coolant passages typically have a diameter between and including 0.5mm and 4mm and the number of coolant passages depends upon the diameter of the seal.

Figure 13 shows an alternative seal according to the present disclosure in more detail. The seal 558 is substantially the same as the seal 58 shown in figures 3 and 4 and like parts are denoted by like numerals. The seal 558 in figure 13 differs in that each coolant passage 68 has a convergent inlet, for example a bell mouth inlet and each second coolant passage 74 has a convergent inlet, for example a bell mouth inlet. This arrangement maximises the pressure drop between the inlets and the outlets of the coolant passages 68 and between the inlets and the outlets of the coolant passages 74.

Similarly, it may be possible to provide each of the coolant passages 68 in figures 5 and 6, figures 9 and 10 or figures 9 and 11 with convergent inlets and it may be possible to provide each of the coolant passages 74 in figures 7 and 8 with convergent inlets.

In summary the present disclosure provides a seal comprising a cylindrical, or tubular, portion having a radially outwardly extending flange at a first, upstream, end and a plurality of circumferentially spaced coolant passages which extend longitudinally through and within, e.g. internally through, the cylindrical, or tubular, portion of the seal from the upstream end of the seal towards the second downstream end of the seal. All of the circumferentially spaced coolant passages may extend all the way to the downstream end of the seal, all of the circumferentially spaced coolant passages may extend part way towards the downstream end of the seal and then extend radially outwardly to the outer surface of the seal upstream of the downstream end of the seal or some of the circumferentially spaced coolant passages may extend all the way to the downstream end of the seal and some of the circumferentially spaced coolant passages may extend part way towards the downstream end of the seal and then extend radially outwardly to the outer surface of the seal upstream of the downstream end of the seal. The seal may have a divergent, or flared, portion its downstream end. The downstream ends of the coolant passages may open out into an annular slot. Each coolant passage is spaced from and arranged between the inner surface and the outer surface of the seal. Each coolant passage may be arranged mid-way between the inner surface and the outer surface.

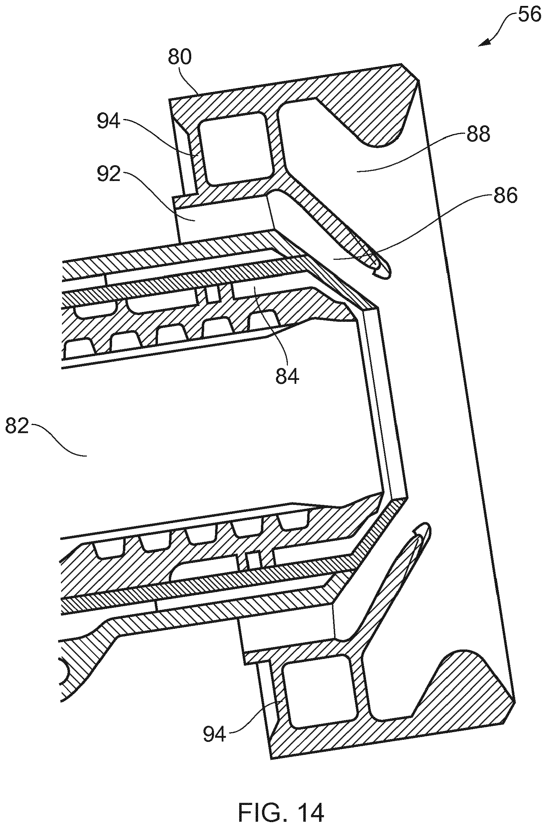

Figure 14 shows a longitudinal cross-section through a rich burn fuel injector 56. The rich burn fuel injector 56 comprises a fuel feed arm and a fuel injector head 80. The fuel injector head 80 comprises an airblast fuel injector. The airblast fuel injector has, in order from radially inner to outer, a coaxial arrangement of an inner swirler air passage 82, a fuel passage 84, an intermediate air swirler passage 86 and an outer air swirler passage 88. The swirling air passing through the passages 82, 86, 88 of the fuel injector head 80 is high pressure and high velocity air derived from the high pressure compressor 14. Each swirler passage 82, 86, 88 has a respective swirler 92, 94 which swirls the air flow through that passage.

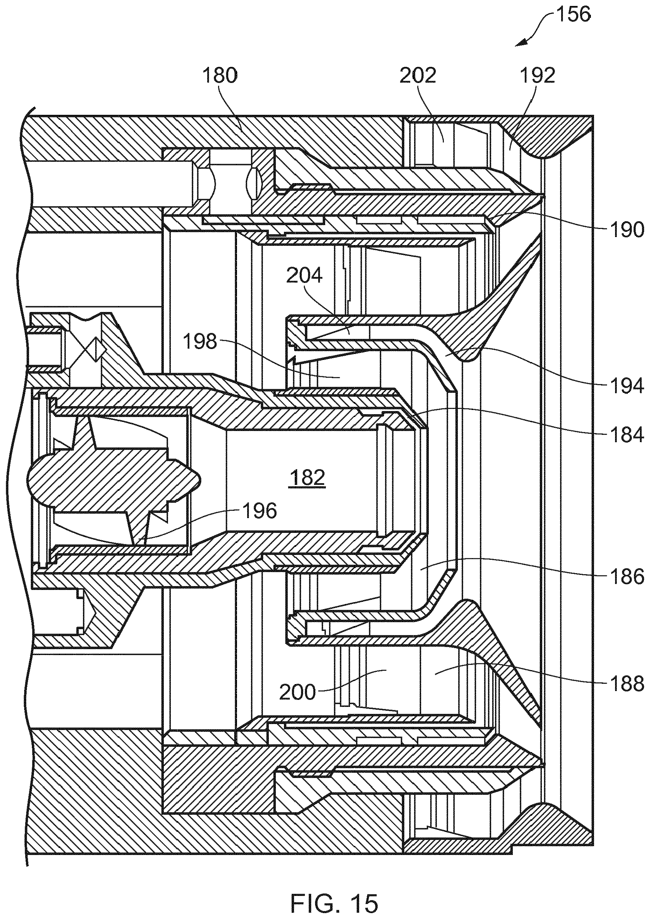

Figure 15 shows a longitudinal cross-section through a lean burn fuel injector 156. The lean burn fuel injector 156 comprises a fuel feed arm and a fuel injector head 180. The fuel injector head 180 has a coaxial arrangement of an inner pilot airblast fuel injector and an outer mains airblast fuel injector. The pilot airblast fuel injector has, in order from radially inner to outer, a coaxial arrangement of a pilot inner swirler air passage 182, a pilot fuel passage 184, and a pilot outer air swirler passage 186. The mains airblast fuel injector has, in order from radially inner to outer, a coaxial arrangement of a mains inner swirler air passage 188, a mains fuel passage 190, and a mains outer air swirler passage 192. An intermediate air swirler passage 194 is sandwiched between the outer air swirler passage 186 of the pilot airblast fuel injector and the inner swirler air passage 188 of the mains airblast fuel injector. The swirling air passing through the passages 182, 186, 188, 192, 194 of the fuel injector head 180 is high pressure and high velocity air derived from the high pressure compressor 14. Each swirler passage 182, 186, 188, 192, 194 has a respective swirler 196, 198, 200, 202, 204 which swirls the air flow through that passage. Each of the fuel injector heads 80, 180 may have a portion which has part spherical surface so to abut and seal against the inner surface of the second portion 62 of the associated seal 58. Alternatively, each of the fuel injector heads 80, 180 may have a portion which has cylindrical surface so to abut and seal against the inner surface of the second portion 62 of the associated seal 58.

Although the present disclosure has been described with reference to an annular combustion chamber it is equally applicable to a tubular combustion chamber comprising an upstream end wall and an annular wall and the upstream end wall has a single aperture with a fuel injector and a seal or to a can annular combustion chamber arrangement comprising a plurality of circumferentially spaced tubular combustion chambers each comprising an upstream end wall and an annular wall and the upstream end wall of each tubular combustion chamber has a single aperture with a fuel injector and a seal.

The combustion chamber may be a gas turbine engine combustion chamber.

The gas turbine engine may be an industrial gas turbine engine, an automotive gas turbine engine, a marine gas turbine engine or an aero gas turbine engine.

The aero gas turbine engine may be a turbofan gas turbine engine, a turbojet gas turbine engine, a turbo-propeller gas turbine engine or a turbo-shaft gas turbine engine.

The advantage of the present disclosure is that the coolant supplied through the coolant passages in each seal provides improved cooling to enable the seals to withstand the high temperature in the combustion chamber adjacent to the seals. The coolant supplied through the coolant passages in each seal reduces the temperature experienced by the third portions of the seals to reduce or prevent oxidation and/or melting of the third portions of the seals. Hence, this prevents or reduces the risk to exposure of the fuel injectors to the high temperature in the combustion chamber which may result in cracking and/or oxidation of the fuel injectors. Furthermore, the possibility of a change in the position of the flame within the combustion chamber which may result in oxidation and/or melting of the heat shields is reduced or prevented.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A combustion chamber (15) comprising an upstream end wall (44), at least one annular wall (40, 42), at least one fuel injector (56) and at least one seal (58), the at least one annular wall (40, 42) being secured to the upstream end wall (44), the upstream end wall (44) having at least one aperture (54), each fuel injector (56) being arranged in a corresponding one of the apertures (54) in the upstream end wall (44), each seal (58) being annular, each seal (58) being arranged in a corresponding one of the apertures (54) in the upstream end wall (44) and around the corresponding one of the fuel injectors (56), each seal (58) having an upstream end, a downstream end, an inner surface (58A) facing the corresponding one of the fuel injectors (56) and an outer surface (58B) facing away from the corresponding one of the fuel injectors (56), each seal (58) abutting the corresponding one of the fuel injectors (56), each seal (58) comprising at least a first portion (60) and a second portion (62), the first portion (60) of each seal (58) being arranged at the upstream end of the seal (58), the first portion (60) of each seal (58) extending radially outwardly from the second portion (62), the first portion (60) of each seal (58) being secured to the upstream end wall (44) such that the seal (58) is movable radially with respect to the axis of the corresponding aperture (54) in the upstream end wall (44), each seal (58) having a plurality of circumferentially spaced coolant passages (68, 74) extending longitudinally internally through the second portion (62) of the seal (58) from the upstream end towards the downstream end of the seal (58).

2. A combustion chamber as claimed in claim 1 wherein the downstream end of each seal (58) having an annular slot (70), the annular slot (70) at the downstream end of each seal (58) being arranged at the downstream ends of the plurality of circumferentially spaced coolant apertures (68) of the corresponding seal (58).

3. A combustion chamber as claimed in claim 2 wherein each coolant passage (68) in each seal diverging (72) circumferentially at a junction with the annular slot (70).

4. A combustion chamber as claimed in any of claims 1 to 3 wherein each coolant passage (68) in each seal (58) having turbulators or pedestals (80).

5. A combustion chamber as claimed in any of claims 1 to 4 wherein the second portion (62) of each seal (58) being cylindrical from the first portion (60) at the upstream end of the seal (58) to the downstream end of the seal (58).

6. A combustion chamber as claimed in claim 5 wherein the outlet of each coolant passage (68) being angularly spaced from the inlet of the coolant passage (68).

7. A combustion chamber as claimed in any of claims 1 to 4 wherein each seal (58) having a third portion (74), the second portion (62) abutting the corresponding one of the fuel injectors (56), the third portion (64) being arranged at the downstream end of the seal (58), the third portion (64) increasing in diameter in a downstream direction, the second portion (62) being arranged upstream of the third portion (64), the coolant apertures (68) extending internally through the second portion (62) with an axial component and the coolant apertures (68) extending internally through the third portion (64) with axial and radial components.

8. A combustion chamber as claimed in claim 7 wherein the third portion (64) of each seal (64) being a frustoconical portion or a bell mouth portion.

9. A combustion chamber as claimed in claim 8 wherein each seal (58) having an annular slot (70) at the downstream end of the frustoconical portion of the seal (58).

10. A combustion chamber as claimed in claim 7, claim 8 or claim 9 wherein each seal (58) having a plurality of circumferentially spaced second coolant passages (74) extending longitudinally internally through the second portion (62) of the seal (58) from the upstream end to the outer surface (58B) of the seal (58).

11. A combustion chamber as claimed in claim 10 wherein each second coolant passage (74) in each seal (58) having turbulators or pedestals (80).

12. A combustion chamber as claimed in claim 10 or claim 11 wherein the outer surface (58B) of each seal having a second annular slot (76), the second annular slot (76) at the outer surface (58B) of each seal (58) being arranged at the downstream ends of the plurality of circumferentially spaced second coolant apertures (74) of the corresponding seal (58).

13. A combustion chamber as claimed in claim 12 wherein each second coolant passage (74) in each seal (58) diverging (78) circumferentially at a junction with the second annular slot (76).

14. A combustion chamber seal as claimed in any of claims 10 to 13 wherein the coolant passages (68) and the second coolant passages (74) of each seal (58) being arranged circumferentially alternately around the seal (58).

15. A combustion chamber as claimed in any of claims 10 to 14 wherein the axes of the second coolant apertures (74) in second portion (62) of each seal (58) being arranged to intersect the outer surface (58C) of the third portion (64) of the seal (58) to direct coolant onto the third portion (64) of the seal (58).

16. A combustion chamber as claimed in any of claims 1 to 15 wherein the combustion chamber (15) being an annular combustion chamber comprising an annular upstream end wall (44), a radially inner annular wall (40), a radially outer annular wall (42), a plurality of fuel injectors (56) and a plurality of seals (58) and the annular upstream end wall (44) having a plurality of apertures (54).

17. A combustion chamber as claimed in any of claims 1 to 16 wherein the combustion chamber (15) being a gas turbine engine (10) combustion chamber.
